# EUROPEAN PATENT APPLICATION

(11) **EP 1 455 472 A1**
(43) Date of publication of application: **08.09.2004**
(21) Application number: 03251413.5
(22) Date of filing: 07.03.2003
(51) Int. Cl.: H04J 3/06

(54) **Timing control for packet streams**

(71) Applicant: STMicroelectronics, Ltd., Almondsbury, Bristol, BS32 4SQ (GB)
(72) Inventor: Morris, Matt, Sneyd Park, Bristol BS9 1JZ (GB)
(74) Representative: Driver, Virginia Rozanne

(57) **Abstract**

A stream processing system is described in which packets of an input stream each include individual timestamps which represent relative delays between the packets. A programmable counter generates continuously count values which are compared with the timestamps in the packet stream. An output controller determines whether or not to release packets from an output port based on the result of the comparison, preferably only releasing packets when the programmable count value equals the timestamp.

## Description

The present invention relates to controlling the delays between successive packets in an output stream. The invention is particularly but not exclusively applicable to stream processing systems in which the output stream represents a steam of processed packets.

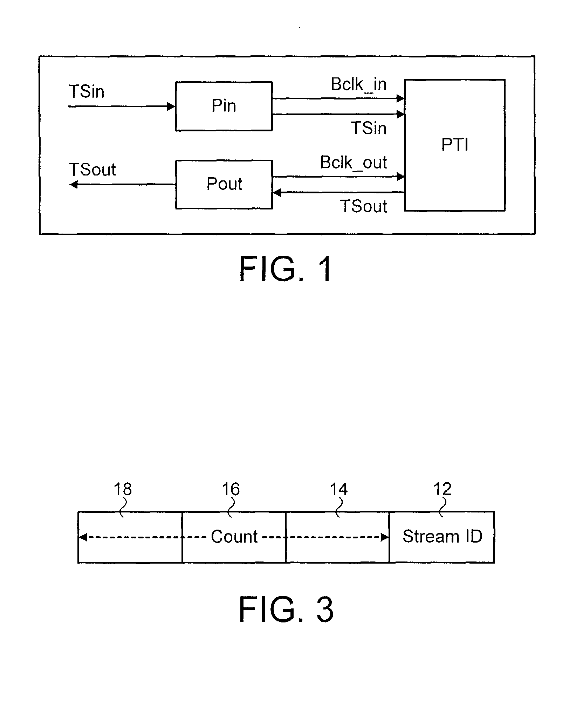

Figure 1 illustrates a stream processing system where a single input packet stream TSin is received at an input port Pin and transferred from there to a programmable transport interface (PTI) to undergo processing. The input port Pin generates an input byte clock Bclk_in which is supplied to the programmable transport interface PTI with the input packet stream TSin. After processing, the PTI generates an output packet stream TSout under the control of an output clock Bclk_out generated by the output port Pout. A latency counter in the PTI determines when a packet should leave the output port Pout based on a comparison between the number of input byte clock periods against the number of output byte clock periods. This ensures that the delay between successive packets in the output stream matches that between successive packets in the input stream

Systems exist where a plurality of input streams TSin0 ... Tsinn at a low bit rate (LBR) are merged into one or more high bit rate output stream for transfer to the PTI. In such a system, a clocking technique as just described can no longer be applied. The input byte clock is merged with a number of input streams and therefore no longer represents the original single stream TSout to be sent to the output port. The output streams no longer go directly to the output ports because they first are passed through a TSmerger unit which implements merging of the input streams and therefore the output byte clock is lost altogether.

It is an aim of this invention to provide a timing mechanism which does not rely on separately transmitted clock signals.

According to one aspect of the invention there is provided a stream processing system for processing a stream of input packets and generating a stream of processed, output packets, the system comprising: a first counter for providing each input packet with a timestamp indicative of the time of receipt of that packet; a processor for processing the input packets to generate the stream of output packets, each output packet including a first count value related to the timestamp; a second counter for generating a second count value indicative of delay; and an output controller operable to compare said second count value with the first count value in each output packet and to determine whether or not to transmit the packet based on said comparison.

In the described embodiment, the output controller is configured to transmit the packet when the second count value equals the first count value. It will be appreciated that this equality need not be absolute, but could depend on the granularity of the clocks. The invention is most effective when the packet is transmitted when the second count value equals the first count value.

Another aspect of the invention provides a dejitter mechanism for controlling the delays between packets of an output stream, the dejitter mechanism comprising: an input for receiving a packet stream, each packet including a first count value indicative of relative transfer times for the packets in the stream; a counter for generating a second count value indicative of delay; and an output controller operable to compare said second count value with the first count value in each packet and to determine whether or not to transmit the packet based on said comparison, whereby the delay between successive packets in the output stream has a fixed relationship with delays between successive packets in the input stream.

A further aspect of the invention provides a method of controlling the delay between successive packets in an output packet stream, the method comprising: providing an input packet stream wherein each packet includes a timestamp indicative of the relative timing of packets in the input stream; generating a second count value indicative of delays; and comparing said second count value with the first count value in each packet and determining whether or not to transmit the packet based on said comparison whereby delays between successive packets in the output stream bear a fixed relationship with delays between successive packets in the input stream.

The invention also provides a playback system in which the packet stream is provided from memory, the packet stream including packets which hold count value indicative of delays between successive packets.

The first count value in the output packets can be the timestamp itself, or the timestamp and an offset introduced at the processor.

The timestamp can be held in a packet header, together with a stream identifier if necessary.

The system described herein is particularly useful in the context of stream processing where a plurality of input streams are merged to generate a single stream of packets to be processed. In these types of systems, it is not possible to use separate clock signals for the reasons discussed above.

For a better understanding of the present invention and to show how the same may be carried into effect reference will now be made by way of example, to the accompanying drawings in which:
Figure 1 is a schematic block diagram of a known single stream processing system;
Figure 2 is a schematic block diagram of a stream processing system including a dejitter mechanism;
Figure 3 is a diagram of a packet header; and
Figure 4 is a schematic timing diagram illustrating operation of the dejitter mechanism; and
Figures 5A and 5B are schematic diagrams illustrating a playback system.

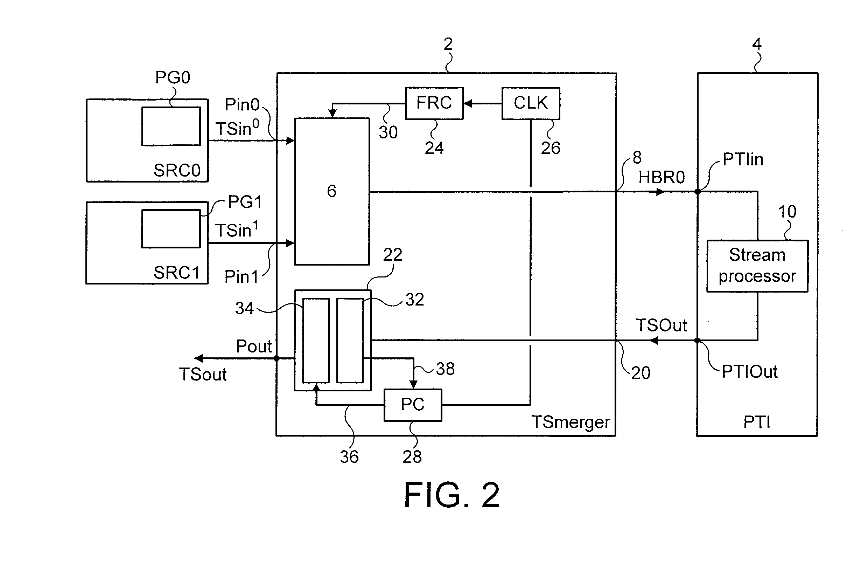

Figure 2 illustrates a schematic diagram of a stream transfer system implementing a dejittering mechanism in accordance with one embodiment of the invention. Figure 2 illustrates a TSmerger unit 2 receiving at its input ports Pin0, Pin1 respective input streams TSin0, TSin1. These streams come from respective sources SRC0, SRC1 each source including a packet generator PG0, PG1 respectively which formulates packets which compose the input streams TSin0, TSin1.

The input streams TSin0, TSin1 are input to the TSmerger unit 2 at a certain bit rate referred to herein as a low bit rate LBR. The TSmerger unit 2 includes an input buffer 6 where the input streams TSin0, TSin1 are merged into a single high bit rate output stream HBR0 which is buffered in a RAM (not shown in Figure 2) and output from the TSmerger unit at a PTI connection port 8. Thus, the stream HBR0 contains packets from both the input streams TSin0 and TSin1. It will be appreciated that although two input streams are shown as being merged together, any number of input streams could be present. The high bit rate stream HBR0 is supplied to a programmable transfer interface PTI 4 at its input port PTlin where packet processing is carried out in a stream processor 10. The stream processor generates an output stream TSout which is transmitted from the output port PTlout and received at the TSmerger unit 2 via PTI connection port 20. The output stream TSout is supplied shown in Figure 2 as going directly to a stream controller 22 which will be discussed in more detail hereinafter. However, in practice, the stream TSout also passes through the buffer 6 and RAM (not shown) before the stream controller 22. Subject to the operation of the stream controller, the stream TSout is output from the TSmerger output port Pout.

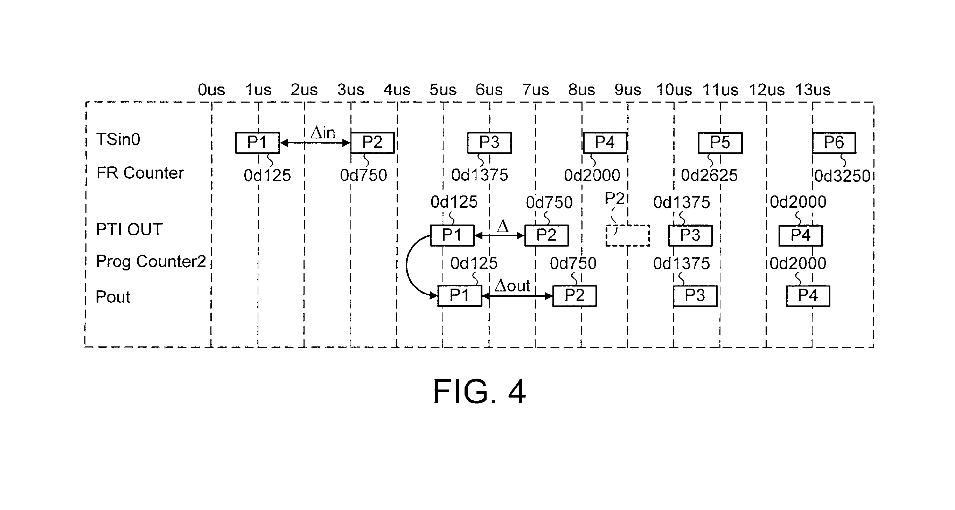

Each stream packet contains data (not shown) and has a header of a format illustrated in Figure 3. The header is composed of four bytes, the first byte 12 of which denotes a stream identifier, indicating to the stream processor in the PTI 4 the identity of the source of the stream for processing purposes. The remaining three bytes of the header 14, 16, and 18 constitute a 24 bit counter field for holding a count value representative of a time stamp for receipt of the packet as discussed in more detail in the following.

The TSmerger unit 2 includes a free running counter FRC 24 which is clocked at a frequency of 27 MHz by a clock 26. It will readily be appreciated that this frequency value is given by way of example only and any suitable clock frequency can be selected. The TSmerger unit also includes a programmable counter PC 28 clocked by the same clock 26. The free running counter 24 provides a count value 30 which is used to timestamp incoming packets from the input streams TSin0, TSin1 by loading a count value (herein referred to as a timestamp) into the 24 bit counter field of the header illustrated in Figure 3. It will be appreciated that streams which already include timestamps (e.g. TSout) are not stamped by the free running counter as they pass through the buffer 6. The programmable counter PC 28 provides an ongoing count value 36 to the stream controller 22.

As each packet arrives at the input port Pin of the TSmerger unit 2, it is effectively timestamped with a count value (timestamp) representing its time of arrival. After processing at the stream processor 10, the packet retains in its header this timestamp (or the timestamp modified by a fixed offset as described in the alternative embodiment below) after processing, such that this timestamp is included in each packet of the output stream TSout returned to the TSmerger unit 2.

The stream controller 22 comprises a buffer 32 for holding incoming packets and a comparator 34 which determines when packets held in the buffer 32 are released at the output port Pout. Release of packets by the controller 22 is dependent on the value 36 of the programmable counter which is supplied to the comparator 34.

The aim of the free running counter 24 and programmable counter 28 is to provide as far as possible matched delays between successive packets of an input stream (for example TSin0) and successive packets of the accordingly processed output stream TSout. The function of the controller 22 is discussed in more detail in the following with reference to Figure 4.

Figure 4 illustrates along the top line the time in µs relating to receipt of packets of the input stream TSin0 at the input port Pin0 of the TSmerger unit 2. Just below that, successive packets of a packet stream are illustrated labelled P1 to P6. Each successive packet is separated from its preceding packet by a delay which is labelled Δ in between packets P1 and P2. The delay between successive packets may vary depending on the nature of the input stream. The aim of the dejittering mechanism is to maintain the same delays between equivalent successive packets of the output stream after processing.

In the next line of Figure 4 are shown the digital values of the free running counter 24 in the format 0dxxx, where x is an integer. These represent the timestamps inserted into the count field 14, 16, 18 of the packet headers as they are received. Thus, packet P1 carries a timestamp of 125, the packet P2 carries a timestamp of 750, etc. As mentioned above, the packets are timestamped by inserting the value 30 received from the free running counter 24 at the point of receipt of each packet into the count field.

The next line represents the same sequence of packets being dispatched from the output port PTlout of the PTI 4 after processing. These packets carry the same packet denominators (P1, P2 etc) as the packets of the input stream TSin0, although it will be appreciated that the data in the packets may be different due to the processing which has been carried out on them. These packets are separated by delays Δ, which is illustrated between packets P1 and P2 in Figure 4. The delay Δ is not the same as the delay Δ in between the same successive pairs of the input stream TSin0. This is because packets may be held up to different extents in the stream processor 10 depending on the nature of the processor. Also, merging of the input streams TSin0, TSin1 at the TSmerger unit 2 may also incur delays which vary for different packets.

The purpose of the output controller 22 is to introduce similar delays Δ out between successive packets of the output stream TSout as were in the input stream. The programmable counter 28 is used for this purpose, and the subsequent line in Figure 4 illustrates the values of the programmable counter which match the timestamp values inserted into the packet headers of the packets in the incoming stream, and the time at which these values are generated. For example, the programmable counter reaches a value of 750 8③s after the first packet was received at the TSmerger unit. The count values 125, 750, 1375 and 2000 are illustrated (the remaining count values 2625 and 3250 associated with packets 5 and 6 not being shown in Figure 4).

It can be seen from Figure 4 that the packet P2 arrives at the output port PTlout of the PTI 4 at a time (7 ③s) before the programmable count value 36 of the programmable counter 28 matches the timestamp in the count field of the header of the packet P2 (i.e. 750 at 8 ③s). The output controller 22 serves to hold up the packet P2 in the buffer 32 until such time as the programmable counter reaches the count value 750 which matches the timestamp in the count field of the header of the packet P2. At that time, the delay Δ out between the outgoing packets P1 and P2 from the output port Pout of the TSmerger unit 2 matches the delay Δ in between the corresponding packets P1 and P2 of the input stream.

In order to achieve this, the programmable counter 28 is programmed with the count value in the header of the first packet P1 when the first packet is received at the controller 22. This is shown diagrammatically by arrow 38 which indicates the passage of that count value (125) from the header of the packet P1 to program the programmable counter 28. Thus, on receipt of the first packet at the controller 22, no comparison of count values takes place, but the programmable counter 28 is set up. The packet P1 is then subsequently dispatched without further delay from the output port Pout. The small delay shown in Figure 4 between the packet P1 at PTlout and Pout merely represents the inherent delay in the controller 22. When the subsequent packet P2 is received at the controller 22, the count value in its header is compared with the existing programmable count value from the programmable counter 28 as indicated by line 36 in the comparator 34. If the programmable count value is less than the count value in the header, the packet is held up, and as illustrated in Figure 4 this is the case with packet P2 which is held up until the delay Δ out between the packets P2 and P1 is equal to the delay Δ in between the packets P2 and P1 in the incoming stream. The packet P2 is then output. Subsequent packets are treated in the same way.

A possible problem with this arrangement is illustrated in Figure 4 by the dotted rectangular block representing the packet P2. In this case, the packet P2 is received at the output port PTlout of the PTI 4 at 9 s, i.e. after the count value 36 from the programmable counter 28 has passed the value (750) in the header of the packet itself. In such a situation, the system is likely to stall. This situation could arise where the inherent latency in the merger unit 2 and/or the PTI 4 (specifically the stream processor 10) is large compared with the delay between successive packets. In order to overcome this problem, the stream processor 10 can add to the count value in the header of each incoming packet an offset sufficient to cover the inherent latency. In that case, the programmable count value 36 from the programmable counter 28 is compared in the controller 22 with the initial timestamp plus the added offset. This situation ensures that the packets should always arrive before the value of the programmable counter is exceeded by the value in the count field of the packet itself.

While the above-referenced embodiment is described in relation to merged input streams, it is apparent that the present invention is also applicable to a situation with a single input stream.

It will also be apparent that the invention can be applied to a situation where one or more packet stream is played back from memory, such as hard disk. That is, the packets have been previously processed and stored with count values in their headers identifying the delays between successive packets. By using the dejitter mechanism on packet streams of this nature, the packets can emerge from the TSmerger unit 2 at the same rate as the original stream was constructed. According to another possible modification, where the packet stream represents video or audio data, a play x 2 speed can be achieved by increasing the programmable counter increment to 2 to "speed up" the packets by halving their relative delays.

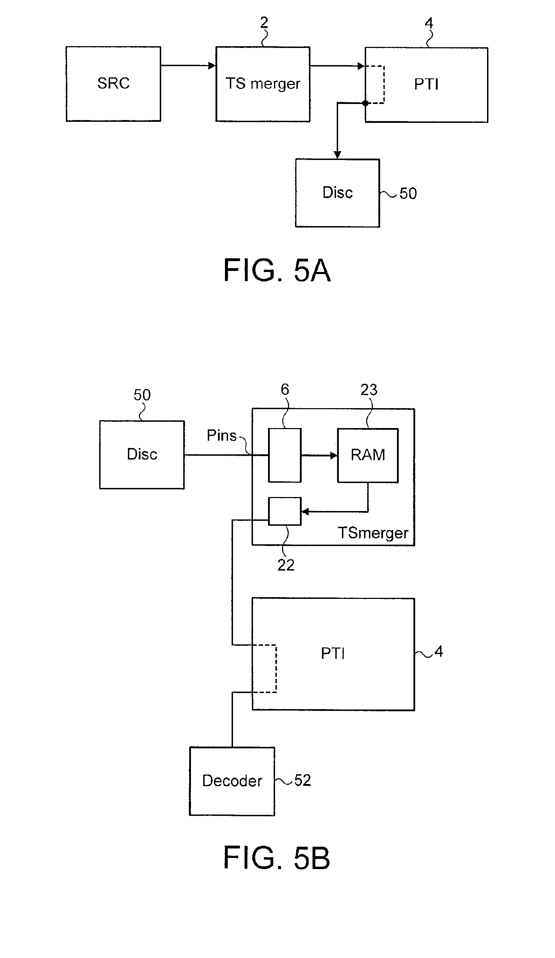

Figures 5A and 5B are schematic diagrams illustrating such a scheme. A data stream from a source SRC is supplied to the TSmerger unit 2 where packets are timestamped. The timestamped packets are supplied to the PTI 4 where they are processed as described above. They are output from the PTI 4 to a hard disk or other storage means 50.

Subsequently, when playback is to be effected, the disk 50 is used as a source for the TSmerger unit 2. The data stream with timestamped packets is supplied from the disk 50 a software input port PinS of the TSmerger unit which is similar to the input ports Pin0, Pin1 of Figure 2 apart from the fact that the free running counter 24 is not active to timestamp the packets. This is because the packets are already timestamped. The datastream from the disk 50 is supplied via the input buffer 6 to the RAM 23 (which was mentioned in relation to Figure 2 but not illustrated in that Figure) and from there to the stream controller 22 where the dejitter mechanism is effective. The dejitter stream is supplied to the PTI 4 where it is processed or not according to the requirements and is output from the PTI 4 to a decoder 52 or other playback mechanism.

## Claims

1. A stream processing system for processing a stream of input packets and generating a stream of processed, output packets, the system comprising:
a first counter for providing each input packet with a timestamp indicative of the time of receipt of that packet;
a processor for processing the input packets to generate the stream of output packets, each output packet including a first count value related to the timestamp;
a second counter for generating a second count value indicative of delay; and
an output controller operable to compare said second count value with the first count value in each output packet and to determine whether or not to transmit the packet based on said comparison.

2. A stream processing system according to claim 1, wherein the output controller is configured to transmit the packet when the second count value equals the first count value.

3. A stream processing system according to claim 1, wherein the first count value is the same as the timestamp.

4. A stream processing system according to claim 1, wherein the processor includes means for adding to the timestamp an offset to generate the first count value.

5. A stream processing system according to any preceding claim, wherein each packet comprises a header having a count field for holding the timestamp or first count value respectively.

6. A stream processing system according to claim 5, in which the header comprises a stream identifier denoting the source of the stream.

7. A stream processing system according to any preceding claim, which comprises a stream merger unit for combining a plurality of input streams into a single stream to be supplied to the processor for processing.

8. A stream processing system according to any preceding claim, wherein the processor is embodied in a programmable transport interface.

9. A stream processing system according to any preceding claim, wherein the first and second counters are under the control of a common clock.

10. A dejitter mechanism for controlling the delays between packets of an output stream, the dejitter mechanism comprising:
an input for receiving a packet stream, each packet including a first count value indicative of relative transfer times for the packets in the stream;
a counter for generating a second count value indicative of delay; and
an output controller operable to compare said second count value with the first count value in each packet and to determine whether or not to transmit the packet based on said comparison, whereby the delay between successive packets in the output stream has a fixed relationship with delays between successive packets in the input stream.

11. A dejitter mechanism according to claim 10, wherein each packet comprises a header having a count field for holding the first count value.

12. A dejitter mechanism according to claim 11, wherein the header comprises a stream identifier denoting the source of the packet stream.

13. A playback system comprising a dejitter mechanism according to claim 10, 11 or 12 and a memory holding said input packet stream.

14. A method of controlling the delay between successive packets in an output packet stream, the method comprising:
providing an input packet stream wherein each packet includes a timestamp indicative of the relative timing of packets in the input stream;
generating a second count value indicative of delays; and
comparing said second count value with the first count value in each packet and determining whether or not to transmit the packet based on said comparison whereby delays between successive packets in the output stream bear a fixed relationship with delays between successive packets in the input stream.

15. A method according to claim 14, which includes the step of providing each packet of the input stream with a timestamp.

16. A method according to claim 15, which includes the step of adding an offset to the timestamp in each packet to generate the first count value.
